# EUROPEAN PATENT SPECIFICATION

(11) **EP 2 719 822 B1**
(45) Date of publication and mention of the grant of the patent: **27.12.2017**
(21) Application number: 13188516.2
(22) Date of filing: 14.10.2013
(51) Int. Cl.: D06G 1/00

(54) **Mat washing system and a mat washing process**
Mattenwaschsystem und Mattenwaschverfahren
Système et processus de lavage de tapis

(30) Priority: 15.10.2012 SE 1251164
(43) Date of publication of application: 16.04.2014
(73) Proprietor: Hr Björkmans Entremattor AB, 23291 Arlöv (SE)
(72) Inventor: Berg, Lars, 21227 MALMÖ (SE)
(74) Representative: Ström & Gulliksson AB

(56) References cited:
- JP-A- 2010 162 517
- US-A1- 2005 056 581
- Anonymous: "> Naturlig mattvätt med regnvatten och dresserade bakterier", , 16 February 2012 (2012-02-16), XP055095237, Retrieved from the Internet: URL:http://web.archive.org/web/20120216115 449/http://www.hrbjorkman.se/miljon/rening ssystem [retrieved on 2014-01-08]

## Description

### TECHNICAL FIELD

The present invention is related to a mat washing system and a mat washing process comprising purification of used water so that the used water may be used again.

### BACKGROUND

Many companies which use mats in large quantities, indoors as well as outdoors, such as hotels or mat rental companies, also have mat cleaners. The cleaners often demand a lot of resources since large volume of water is needed, which then run out into the drain. They also demand large quantities of electricity to heat up the water to the right temperature.

Today it is known to use different types of cleaning tanks to purify the washing water after a washing process, which has been contaminated by e.g. chemicals, dirt and bacteria from the mats and the washing detergent. However, there is a problem with those cleaning tanks used by the washing processes. Often, the water, which is about to be returned to the washing machines to be used again for the next washing process, smells bad, which gives the mats that are washed in the water, also a bad smell. Any businesses using mats like these would for sure not want a bad smelling mat since this is usually the first thing that a customer gets in contact with when e.g. entering a store or a hotel. In order to get rid of the bad smell, the water in the washing process would have to be changed between every process. A great volume of water is needed for a mat washing process and to change the water for each wash is neither economically sustainable for a mat cleaner nor environmentally friendly.

Another problem with washing systems today is that they commonly use many cleaning tanks in the process which makes the water temperature to drop the longer time the washing process takes. This means that a lot of energy is needed to re-heat the water and this is costly.

An example of a known cleaning system is described on the website address http://www.hrbjorkman.se/miljon/reningssystem, or in document XP055095237.

### SUMMARY

An objective of the present invention is to achieve a new mat washing system to alleviate, lessen, reduce, decrease and/or circumvent the above mentioned problems. The system is defined by the appended independent claims and possible embodiments are defined by the dependent claims. According to the present invention two or more bacterial tanks are arranged in series in manner such that the washing water, which has been used in one bacterial tank, may be re-circulated to a bacterial tank arranged upstream.

According to an aspect of the present invention there is thus provided a mat washing system, comprising at least one washing machine and one separation tank, connected to the washing machine, for removal of sand and gravel from the washing water that is emptied from the washing machine. Further, it comprises a first tank, connected to the separation tank, for purifying the washing water by means of bacteria, a second tank for purifying the washing water by means of bacteria, wherein the second tank is arranged down stream from the first tank, and a return flow pipe for re-circulation of the washing water, which is used in the second tank, to the first tank. This type of system efficiently purifies the washing water after a washing process so that particles, chemicals and odours are filtered out. Especially, the re-circulation of washing water from the second tank to the first tank, was surprisingly found to be effective in reducing or even eliminating bad smell. The system may also be arranged so that the washing water by its own force flows through the system, which means that no extra energy needs to be added to run the water in the right direction.

In an embodiment, the second tank is connected to an inlet of the washing machine so that the mat washing system creates a closed system. The closed circuit allows the washing water to be used again, the system to be more or less self-supporting, and the water temperature to be kept relatively constant during the entire purification process, which thereby saves both energy and water. Further, the closed circuit also contributes to no contaminated water is flushed out into the environment.

In an alternative embodiment, the mat washing system comprises a rain water tank for gathering of rain water, where the rain water tank is connected to an inlet of the separation tank. When fresh water needs to be added, because of water evaporating from the system, natural rainwater is taken, which has been gathered in the rainwater tank, which is an advantageous since the rainwater may be gathered from the environment where the mat washing system is arranged, which leads to even more energy savings since resources from the close by surroundings are used.

In yet another alternative embodiment, the separation tank, the bacteria tanks and/or the rainwater tank comprise isolation in order to keep the water temperature as high as possible. An advantage with this is that no or a small amount of energy needs to be provided in order to heat up the water before the next wash.

In an embodiment, the mat washing system further comprises an air pump for supplying oxygen to the water in at least on the tanks that purify the water by means of bacteria. The supply of oxygen is advantageous since the purification of the water gets even more efficient and the water gets cleaner.

### BRIEF DESCRIPTION OF THE DRAWING

Embodiments of the present invention will further be described with reference to the accompanying drawing, wherein:

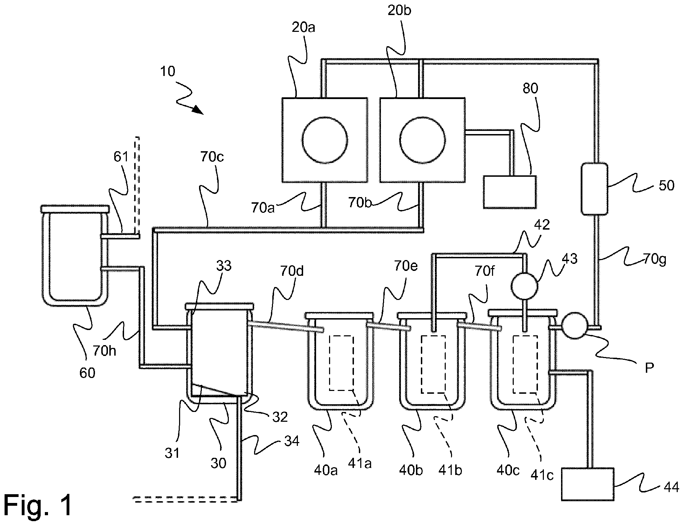

Fig. 1 shows a system to purify water from a mat washing process.

### DETAILED DESCRIPTION OF EMBODMENTS

The shown embodiments will now be described in more detail with reference to the accompanying drawings. The invention may however comprise several different components and is therefor not limited by the shown embodiments but shall just be seen as examples of the invention.

Fig. 1 shows a mat washing system 10 according an embodiment which in an energy efficient way purifies the washing water after a mat washing process, so that the water may be used again for several washes. The mat washing system 10 comprises at least one washing machine, in this case two identical washing machines 20a, 20b, which cleans mats. Usually, one washing program, in one washing machine 20a, 20b, is running at a time but it is possible to run both washing machines 20a, 20b at the same time. The system 10 further comprises a separation tank 30, a first bacteria tank 40a, a second bacteria tank 40b and a third bacteria tank 40c through which the washing water flow and in different ways purifies.

In the separation tank 30 the washing water is separated from sand and gravel by letting the sand and gravel fall down to the bottom 31 of the separation tack 30. The bottom of the separation tank is preferably shaped as a slant down towards one of the sides of the walls of the separation tank 30. In Fig. 1 the bottom slopes towards the right bottom part 32 of the separation tank 30 since the washing water, since it flows in from the top left part 33 of the separation tank 30, naturally creates a water stream which leads the sand the gravel down towards the right bottom part 32. At the right bottom part 32 a drainage pipe 34 is arranged from which sand and gravel may be emptied when necessary. In another embodiment the bottom part of the separation tank may be shaped as a cone where the lowest point, i.e. where the drainage pipe is arranged, instead is located in the middle of the bottom part.

The first, second and third bacteria tank 40a, 40b, 40c are tanks which purify the washing water by means of bacteria, for example by the bacteria composition 1010 and 1425 which are commercially available at the producer HTS BIO. The bacteria are of the same type as the ones found in natural water streams but are adapted to eat certain types of dirt. They are preferably fed with nutriments once a week and as a suggestion nutriments are added in connection to a cleaning or an emptying of the bacteria tanks 40a, 40b, 40c. In every bacteria tank 40a, 40b, 40c a bacteria device 41a, 41b, 41c is arranged for the comfort of the bacteria.

Further, a return flow pipe 42 is provided between the third bacteria tank 40c and the second bacteria tank 40b for re-circulating of the washing water. The re-circulation takes place for example by means of a pump 43 and by re-circulating the water from the third bacteria tank 40c to the second bacteria tank 40b bad odours in the water are reduced or eliminated so that it can be re-used in further washing processes. The return flow pipe 42 is arranged to allow for direct re-circulation of the washing water from the third tank (40c) to the second tank (40b). Such direct re-circulation is according to an embodiment to be interpreted to mean the water is re-circulated directly to the first tank (40a), and not indirectly via e.g. the separation tank (30).

In an alternative embodiment the system may comprise less or more bacteria tanks. All types of tanks in the system are preferably casted in concrete and provided with an isolation to be able to keep the water temperature relatively constant.

In yet an alternative embodiment the mat washing system may comprise a volcanic rubble filter, arranged after the purification in the bacteria tanks. When the washing water flows through the volcanic rubble filter bad odours are eliminated from the water. The volcanic rubble filter may be an alternative to the return flow pipe in Fig. 1.

Further, an air pump 44 is connected to one or more of the bacteria tanks 40a, 40b, 40c for supplying oxygen to the water in the tanks. The supply of oxygen to the water makes the purification process even more efficient and allows the bacteria to thrive. The air pump 44 may also be connected to other parts of the system 10, e.g. to the separation tank 30 when extra oxygen is demanded.

The mat washing system 10 may also comprise an optional particle filter 50 which is arranged in the system 10 before the water again flows into the washing machines 20a, 20b.

The system 10 is a closed system where up to 98% of the water is re-used and where the rest evaporate or follow in the emptying of the tanks. To be able to re-fill the system 10 with fresh water the system 10 also comprises a rainwater tank 60 which is connected to the separation tank 30. The rainwater is gathered from roof surfaces (not shown) in the surroundings of where the mat washing system is located, via rain gutters, rainwater pipes (not shown) and finally a water pipe 61 down into the rain water tank 60.

The different parts of the system 10 are connected to each other by means of one or several water pipes, which also are shown in Fig. 1. From every washing machine 20a, 20b a first and second water pipe 70a, 70b runs which then are joined in a third water pipe 70c. The third water pipe 70c directs the washing water from the washing machine 20a, 20b to the separation tank 30. Further, the water is directed from the separation tank by means of a fourth water pipe 70d to the first bacteria tank 40a. The fourth water pipe 70d preferably slopes by an angle down towards the first bacteria tank 40a so that the water by itself can flow down into it. Between the first bacteria tank 40a and the second bacteria tank 40b, and between the second bacteria tank 40b and the third bacteria tank 40c is a fifth water pipe 70e and a sixth water pipe 70f arranged. The fifth and sixth water pipe 70e, 70f are as the fourth water pipe 70d preferably slightly sloped downwards so that the water can flow freely down into the respective tanks 40b, 40c. From the third bacteria tank 40c a seventh water pipe 70g directs the water back to the washing machines 20a, 20b by means of a pump P, via the optional particle filter 50. Further, the rainwater tank 60 is connected to the separation tank 30 by means of an eighth water pipe 70h.

When the system 10 with the tanks 30, 40a, 40b, 40c, 60 is a closed system, which is shown in Fig, 1, the water temperature may be kept relatively constant, preferably between 30°C and 35°C. This means that great energy savings may be made since the water does not need to be heated that many degrees every time a washing process is about to start. However, sometimes the water needs to be heated, e.g. since the next wash will need 40°C, the mats are often washed in between 30°C and 40°C, there is provided a steam boiler 80 which is arranged in a direct connection to the washing machines 20a, 20b in order to heat the water the last degrees. The mat washing system 10 according to the description above needs approximately 0,45kW/(kg laundry) for heating, which is far below the value for being environmental friendly in Sweden. The washing machines 20a, 20b are driven by natural gas which also contributes to a more environmental friendly and energy saving process.

To be able to efficiently wash a great amount of mats it is preferred to have at least two washing machines 20a, 20b. The washing machines 20a, 20b may in turn be connected to a dryer (not shown) for drying e.g. the mats. Since the drying process takes less time then the washing process it is preferred to run the washing machines so that they overlap each other so that the dryer is always running.

At every washing process the washing water is contaminated by dirt and chemicals from among others the washing detergent. The mat washing system which has been described above is well adapted to use different kinds of bio agents instead of washing detergent which is a great advantage since it ever more improves its effect on the environment. When washing detergent is used this system only needs a third of the amount of washing detergent compared to systems used today, which means that the amount of chemicals that may affect the environment in a negative way is low.

The washing water, which is about to be re-used after a mat washing process, runs through a number of purification steps. First, the washing water flows to a separation tank 30 in which among others gravel and sand are separated from the washing water by letting the gravel fall down to the bottom of the tank. When fresh water needs to be added to the washing water it is taken from a rainwater tank 60 which gathers rainwater from the nearby buildings. The rainwater also flows through the separation tank 30. Further, the water, the washing water and the rainwater flows to a number of tanks 40a, 40b, 40c which all comprises a bacteria device where bacteria purifies the water from among others unwanted particles and dirt. The water preferably flows freely between the tanks 40a, 40b, 40c by means of water pipes 70d, 70e, 70f which slightly slope down towards the next tank. Between two of the tanks 40b, 40c a return flow pipe 42 is arranged so that the water may re-circulate to the tank 40b before. This procedure shows to be a very effective way in order to remove bad odours from the water, which otherwise would gather in the mats being washed, which would not be appreciated by the ones using the mats. From the tanks 40a, 40b, 40c, which purifies the water by means of the bacteria device, the water may be directed to the washing machines 20a, 20b again when a new washing process is about to start. Alternatively the water may be directed through a particle filter 50 before returning to the washing machines 20a, 20b to separate the final last particles from the water.

Even if the present invention described above with reference to specific embodiment, the invention is not limited to a specific system. The invention is only limited to the accompanying patent claims.

## Claims

1. A mat washing system, comprising
at least one washing machine (20a, 20b);
a separation tank (30) which is connected to the washing machine (20a, 20b) and configured to remove sand and gravel from washing water emptied from the washing machine (20a, 20b);
a tank (40b) which is connected to the separation tank (30) and configured to purify the washing water by means of bacteria; and
a further tank (40c) which is arranged downstream from said tank (40b) and configured to purify the washing water by means of bacteria;
**characterized in that** said mat washing system further comprises a return flow pipe (42) for re-circulation of the washing water, which has been used in the further tank (40c), to said tank (40b) connected to the separation tank (30).

2. The mat washing system according to claim 1, wherein an outlet of the further tank (40c) is connected to an inlet of the washing machine (20a, 20b) so that the mat washing system creates a closed system.

3. The mat washing system according to claim 1 or 2, further comprising yet a further tank (40a) for purification of the water by means of bacteria, wherein said yet further tank (40a) is connected to and arranged between the separation tank (30) and the tank (40b).

4. The mat washing system according to any one of the preceding claims, further comprising a rainwater tank (60) for gathering of rainwater, wherein the rainwater tank (60) is connected to an inlet of the separation tank (30).

5. The mat washing system according to any one of the preceding claims, wherein the separation tank (30), the bacteria tanks (40a, 40b, 40c) and/or the rainwater tank (60) comprise(s) isolation.

6. The mat washing system according to any one of the preceding claims, further comprising an air pump (44) for supplying oxygen to the water in at least one of the tanks (40a, 40b, 40c) which purifies the water by means of bacteria.

7. Use of a mat washing system according to any of the claims 1-6.

8. A mat washing process, comprising the steps:
- washing the mats in at least one washing machine (20a, 20b),
- running the water with waste, which has occurred during wash, through a separation tank (30) to remove sand and gravel,
- running the water through at least a bacteria tank (40b) and a further bacteria tank (40c) for purification by means of bacteria, **characterised by**
- re-circulating the water from the further bacteria tank (40c) to the bacteria tank (40b) connected to the separation tank (30), and
- running the water back to the washing machine (20a, 20b).

## Patentansprüche

1. Mattenwaschsystem, umfassend
mindestens eine Waschmaschine (20a, 20b);
einen Trenntank (30), der mit der Waschmaschine (20a, 20b) verbunden und zum Entfernen von Sand und Kies aus dem aus der Waschmaschine (20a, 20b) abgelassenen Waschwasser eingerichtet ist;
einen Tank (40b), der mit dem Trenntank (30) verbunden und zum Reinigen des Waschwassers mittels Bakterien eingerichtet ist;
einen weiteren Tank (40c), der von besagtem Tank (40b) stromabwärts angeordnet und zur Reinigung des Waschwassers mittels Bakterien eingerichtet ist;
**dadurch gekennzeichnet, dass** besagtes Mattenwaschsystem des Weiteren umfasst eine Rücklaufleitung (42) zur Rückführung des Waschwassers, das in dem weiteren Tank (40c) verwendet wurde, in den mit dem Trenntank (30) verbundenen Tank (40b).

2. Mattenwaschsystem nach Anspruch 1, wobei ein Auslass des weiteren Tanks (40c) mit einem Einlass der Waschmaschine (20a, 20b) verbunden ist, so dass das Mattenwaschsystem ein geschlossenes System bildet.

3. Mattenwaschsystem nach Anspruch 1 oder 2, des Weiteren umfassend noch einen weiteren Tank (40a) zur Reinigung des Wassers mittels Bakterien, wobei besagter noch weiterer Tank (40a) mit dem Trenntank (30) verbunden und zwischen den Trenntank (30) und den Tank (40b) angeordnet ist.

4. Mattenwaschsystem nach einem der vorhergehenden Ansprüche, das Weiteren umfassend einen Regenwassertank (60) zum Sammeln von Regenwasser, wobei der Regenwassertank (60) mit einem Einlass des Trenntanks (30) verbunden ist.

5. Mattenwaschsystem nach einem der vorhergehenden Ansprüche, wobei der Trenntank (30), die Bakterientanks (40a, 40b, 40c) und/oder der Regenwassertank (60) eine Isolation umfasst bzw. umfassen.

6. Mattenwaschsystem nach einem der vorhergehenden Ansprüche, des Weiteren umfassend eine Luftpumpe (44) zum Zuführen von Sauerstoff zu dem Wasser in mindestens einem der Tanks (40a, 40b, 40c), in denen das Wasser mittels Bakterien gereinigt wird.

7. Verwendung eines Mattenwaschsystems nach einem der Ansprüche 1-6.

8. Mattenwaschverfahren, umfassend die Schritte:
- Waschen der Matten in mindestens einer Waschmaschine (20a, 20b),
- laufen lassen des während des Waschens gebildeten Schmutzwassers durch einen Trenntank (30), um Sand und Kies zu entfernen,
- laufen lassen des Wassers durch mindestens einen Bakterientank (40b) und einen weiteren Bakterientank (40c) zur Reinigung mittels Bakterien,
**dadurch gekennzeichnet, dass**
- das Wassers vom weiteren Bakterientank (40c) zum mit dem Trenntank (30) verbundenen Bakterientank (40b) rezirkuliert und
- das Wasser zurück zu der Waschmaschine (20a, 20b) läuft.

## Revendications

1. Système de lavage de tapis, comprenant au moins une machine à laver (20a, 20b) ;
une cuve de séparation (30) qui est raccordée à la machine à laver (20a, 20b) et configurée pour extraire le sable et le gravier de l'eau de lavage vidée de la machine à laver (20a, 20b) ;
une cuve (40b) qui est raccordée à la cuve de séparation (30) et configurée pour purifier l'eau de lavage au moyen de bactéries ; et
une cuve supplémentaire (40c) qui est agencée en aval de ladite cuve (40b) et configurée pour purifier l'eau de lavage au moyen de bactéries ;
**caractérisé en ce que** ledit système de lavage de tapis comprend en outre un tuyau de retour (42) pour la recirculation de l'eau de lavage, qui a été utilisée dans la cuve supplémentaire (40c), à ladite cuve (40b) raccordée à la cuve de séparation (30).

2. Système de lavage de tapis selon la revendication 1, dans lequel une sortie de la cuve supplémentaire (40c) est raccordée à une entrée de la machine à laver (20a, 20b) de sorte que le système de lavage de tapis forme un système fermé.

3. Système de lavage de tapis selon la revendication 1 ou 2, comprenant en outre encore une cuve supplémentaire (40a) pour la purification de l'eau au moyen de bactéries, dans lequel ladite encore une cuve supplémentaire (40a) est raccordée à et agencée entre la cuve de séparation (30) et la cuve (40b).

4. Système de lavage de tapis selon l'une quelconque des revendications précédentes, comprenant en outre une citerne d'eau de pluie (60) pour recueillir les eaux pluviales, dans lequel la citerne d'eau de pluie (60) est raccordée à une entrée de la cuve de séparation (30).

5. Système de lavage de tapis selon l'une quelconque des revendications précédentes, dans lequel la cuve de séparation (30), les cuves à bactéries (40a, 40b, 40c) et/ou la citerne d'eau de pluie (60) comprend/comprennent une isolation.

6. Système de lavage de tapis selon l'une quelconque des revendications précédentes, comprenant en outre une pompe à air (44) pour fournir de l'oxygène à l'eau dans au moins une des cuves (40a, 40b, 40c) qui purifie l'eau au moyen de bactéries.

7. Utilisation du système de lavage de tapis selon l'une quelconque des revendications 1 à 6.

8. Procédé de lavage de tapis, comprenant les étapes de :
- lavage des tapis dans au moins une machine à laver (20a, 20b),
- circulation de l'eau comprenant des déchets, qui résulte du lavage, à travers une cuve de séparation (30), pour extraire le sable et le gravier,
- circulation de l'eau à travers au moins une cuve à bactéries (40b) et une cuve à bactéries supplémentaire (40c) pour la purification au moyen de bactéries,
**caractérisé par**
- la recirculation de l'eau de la cuve à bactéries supplémentaire (40c) à la cuve à bactéries (40b) raccordée à la cuve de séparation (30), et
- la circulation de l'eau pour retourner à la machine à laver (20a, 20b).
